# EUROPÄISCHE PATENTANMELDUNG

(11) **EP 1 832 771 A1**
(43) Veröffentlichungstag der Anmeldung: **12.09.2007**
(21) Anmeldenummer: 07002488.0
(22) Anmeldetag: 06.02.2007
(51) Int. Cl.: F16D 13/75, F16D 28/00

(54) **Wipphebelaktor mit Nachstellvorrichtung**

(30) Priorität: 07.03.2006 DE 102006010317
(71) Anmelder: LuK Lamellen und Kupplungsbau Beteiligungs KG, 77815 Bühl (DE)
(72) Erfinder: Mán, Lászlo, 77833 Ottersweier-Unzhurst (DE)

(57) **Zusammenfassung**

Es wird ein Wipphebelaktor vorgeschlagen, der insbesondere zur Betätigung einer Kupplung eines Fahrzeuges vorgesehen ist, mit mindestens einem, eine veränderliche Betätigungskraft zum Öffnen und/oder Schließen der Kupplung ausübenden Wipphebel, der mittels einer Feder beaufschlagbar ist und bei dem ein Hebeldrehpunkt des Wipphebels durch Verlagerung einer mittels eines Antriebs betätigten Laufrolle verlagerbar ist, an der der Wipphebel über eine geneigte Wipphebelkurve abgestützt ist, wobei der Wipphebelaktor eine aktiv verstellbare Einrichtung besitzt, die zum Ausgleich einer Veränderung des Kraft-Weg-Verhaltens der Kupplung einen Abstand eines Wipphebelendes relativ zu einer ersten Kupplungsscheibe der Kupplung verändert.

## Beschreibung

Die vorliegende Erfindung betrifft einen Wipphebelaktor, der insbesondere zur Betätigung einer Kupplung eines Fahrzeugs vorgesehen ist, mit mindestens einem, eine veränderliche Betätigungskraft zum Öffnen und/oder Schließen der Kupplung ausübenden Wipphebel, der mittels einer Feder beaufschlagbar ist und bei dem ein Hebeldrehpunkt des Wipphebels durch Verlagerung einer mittels eines Antriebs betätigten Laufrolle verlagerbar ist, an der der Wipphebel über eine geneigte Wipphebelkurve abgestützt ist.

Zur automatisierten Betätigung der Kupplung eines Fahrzeugs sind bereits Hebelsysteme bekannt geworden, die beispielsweise einen Hebel mit unveränderlicher Hebellänge besitzen, der mittels eines elektromotorischen Aktuators zum Öffnen und/oder Schließen der Kupplung angetrieben werden kann. Der Aktuator, der im Falle einer normal offenen Kupplung auch als Wipphebeleinrücker oder Hebeleinrücker bezeichnet wird, besitzt eine Wippe, die mit einem veränderlichen Hebeldrehpunkt ausgestattet ist. An einem Ende des Hebels wirkt nun die Kraft einer Schraubenfeder mit einer linearen Kraft-Weg-Kennlinie und am anderen Ende wirkt die Betätigungskraft der Kupplung, die der von der Kupplung stammenden Kupplungskraft ein Gleichgewicht hält. Die Kupplungskraft weist dabei oft eine nicht-lineare Kraft-Weg-Kennlinie auf und der Wipphebel besitzt eine geneigt ausgebildete Wipphebelkurve, über die auf die eindeutige Zuordnung zwischen einer Laufrolle, die an der Wipphebelkurve abläuft, und der Neigung des Wipphebels Einfluss genommen werden kann.

Die vorstehend beschriebene Wipphebelkurve besitzt auch noch die Funktion, eine definierte Rückstellkraft auf die Laufrolle zu bewirken, sodass beispielsweise im Falle eines Stromausfalls die Laufrolle in Richtung zu dem dann nicht mehr angetriebenen Elektromotor, der den Antrieb des Wipphebelaktors bildet, zurückläuft und es so zu einem selbsttätigen Öffnen des Wipphebelaktors kommt. Die normal offene und vom Wipphebelaktor zur Momentenübertragung zugedrückte Kupplung geht dann in den offenen Zustand über.

Die nominale Betätigungskennlinie, als die Kraft-Weg-Kennlinie der Kupplung führt im Zusammenspiel mit dem Wipphebelaktor mit einer definierten Kraft-Weg-Kennlinie der den Wipphebel beaufschlagenden Federn und der Kontur der Wipphebelkurve zu einer definierten Betätigungskraft zur Verlagerung der Laufrolle. Diese Betätigungskraft wird nun beispielsweise über einen Kugelumlauftrieb oder ein anderes Getriebe zur Wandlung rotatorischer Bewegung in eine translatorische Bewegung in ein Betätigungsmoment gewandelt, welches von dem vorstehend genannten Elektromotor als Antrieb aufgebracht wird.

Kommt es nun beispielsweise aufgrund von Verschleiß der Reibbeläge der Kupplung zu einer Verschiebung der Betätigungskennlinie der Kupplung, so stellt sich am Wipphebelaktor eine neue Gleichgewichtslage des Wipphebels ein und es kommt zu einer Änderung der Neigung des Wipphebels gegenüber der aus der Auslegungsrechnung vorgesehenen nominalen Neigung. Diese Veränderung der Neigung des Wipphebels führt aufgrund der geneigten Wipphebelkurve zu einer Veränderung der an der Laufrolle wirkenden Kraft und damit zu einem Ansteigen des erforderlichen Motormoments des Elektromotors zum Halten oder Bewegen der Laufrolle. Das veränderte Motormoment führt dann zu einer Zunahme der Leistungsaufnahme des Elektromotors und damit zu einem Temperaturanstieg.

Um nun diesem steigenden Motormoment gerecht zu werden, kann ein entsprechend stärker dimensionierter Elektromotor verwendet werden, der diesen höheren Belastungen auch standhält. Dies führt aber neben dem Kostenanstieg auch zu bauraumbedingten Nachteilen bezüglich des Elektromotors, da dieser stärkere Elektromotor mehr Bauraum bedingt und eine größere Leistungsaufnahme aus dem elektrischen Bordspannungsnetz des Fahrzeugs mit sich bringt. Um nun die Verwendung eines stärkeren Elektromotors zu vermeiden, liegt der vorliegenden Erfindung die Aufgabe zugrunde, einen Wipphebelaktor zu schaffen, der dazu in der Lage ist, Veränderungen der Betätigungskennlinie der Kupplung auszugleichen.

Die Erfindung schafft nunmehr zur Lösung dieser Aufgabe einen Wipphebelaktor mit den Merkmalen des Anspruchs 1. Vorteilhafte Ausgestaltungen hiervon sind in den weiteren Ansprüchen beschrieben.

Die Erfindung sieht nunmehr zur Lösung der vorstehend geschilderten Aufgabe einen Wipphebelaktor vor, der insbesondere zur Betätigung einer Kupplung eines Fahrzeugs vorgesehen ist, mit mindestens einem, eine veränderliche Betätigungskraft zum Öffnen und/oder Schließen der Kupplung ausübenden Wipphebel, der mittels einer Feder beaufschlagbar ist und bei dem ein Hebeldrehpunkt des Wipphebels durch Verlagerung einer mittels eines Antriebs betätigten Laufrolle verlagerbar ist, an der der Wipphebel über eine geneigte Wipphebelkurve abgestützt ist, wobei der Wipphebelaktor eine aktiv verstellbare Einrichtung besitzt, die zum Ausgleich einer Veränderung des Kraft-Weg-Verhaltens der Kupplung einen Abstand eines Wipphebelendes relativ zu einer ersten Kupplungsscheibe der Kupplung verändert.

Die Kupplung des Fahrzeugs, bei der es sich um eine trocken oder nass laufende Einscheibenkupplung oder auch Mehrscheibenkupplung handeln kann, erfährt während des Betriebs Verschleiß ihrer Reibbeläge. Dieser Verschleiß führt zu einer Verschiebung der Kupplungskennlinie und zu einer Veränderung des Abstandes des Wipphebelendes relativ zu der ersten Kupplungsscheibe der Kupplung. Die vom Wipphebelaktor aus betrachtete Kraftflussrichtung läuft dabei vom Wipphebelende über ein Ausrücklager, welches bei einer aktiv zugedrückten Kupplung funktional auch als Einrücklager bezeichnet werden kann, einen Hebel, der als Zunge einer Tellerfeder ausgebildet sein kann, zur Anpressplatte und zur Kupplungsscheibe. Sollte es sich um eine Mehrscheibenkupplung handeln, dann sind mehrere Kupplungsscheiben als Lamellenpaket hintereinander angeordnet. Die Reibbeläge können auf der Kupplungsscheibe direkt oder unter Zwischenschaltung einer Belagfederung angebracht sein. Aufgrund des vorstehend bereits erwähnt Belagverschleißes kann sich nun der Abstand zwischen dem Wipphebelende und der ersten Kupplungsscheibe verändern.

Der Wipphebelaktor liegt mit seinem Wipphebelende am Einrücklager auf, sodass die von der Kupplung ausgehende Kupplungskraft zu einem selbsttätigen Öffnen der Kupplung führt, indem im stromlos geschalteten Zustand des Antriebs des Wipphebelaktors die komplette Wipphebelaktorik zurückgedrückt werden kann, damit die Kupplung öffnet.

Ändert sich nun der Abstand zwischen dem Wipphebelende und der ersten Kupplungsscheibe, so kann dies zu einer Abnahme der Rückstellkraft auf den Wipphebelaktor führen und damit kann die Situation eintreten, dass im stromlos geschalteten Zustand des Antriebs des Wipphebelaktors die Kupplung nicht mehr selbsttätig öffnet. Um nun einerseits die Rückstellkraft während des gesamten Betriebs der so betätigten Kupplung weitgehend gleichbleibend zu halten und auch aufgrund derartiger Abstandsveränderungen nicht den vorstehend bereits erwähnten größeren Elektromotor einsetzen zu müssen ist es nach der Erfindung vorgesehen, dass mittels der verstellbaren Einrichtung der Abstand zwischen dem Wipphebelende und der ersten Kupplungsscheibe der Kupplung verändert werden kann. Damit wird erreicht, dass der Abstand zwischen dem Wipphebelende und der ersten Kupplungsscheibe über die Lebensdauer der Kupplung dem aus der Auslegungsrechnung der Kupplung vorbestimmten Abstand zumindest weitgehend entspricht und somit keine funktionsbeeinträchtigenden Veränderungen der Rückstellkraft auftreten und auch der Antrieb des Wipphebelaktors nur das aus der Auslegungsrechnung bekannt vorbestimmte Betätigungsmoment erbringen muss.

Um nun durch die aktiv verstellbare Einrichtung den vom Wipphebelaktor benötigten Bauraum in der Einbaulage im Fahrzeug nicht wesentlich ansteigen zu lassen, ist es nach der vorliegenden Erfindung vorgesehen, dass die aktiv verstellbare Einrichtung mittels des Antriebs des Wipphebelaktors betätigt wird. Damit wird erreicht, dass durch den ohnehin vorhandenen Antrieb des Wipphebelaktors auch die aktiv verstellbare Einrichtung betätigt werden kann.

Vorstehend wurde bereits erwähnt, dass einerseits die Rückstellkraft ein wesentliches Kriterium beim Einsatz des Wipphebelaktors darstellt und anderseits auch die Betätigungskraft des Antriebs, mit der der Wipphebelaktor beaufschlagt wird. Durch die Bestromung des Antriebs des Wipphebelaktors kann die Betätigungskraft verändert werden, sodass durch die Erfassung des Stromwerts einerseits die Betätigungskraft festgestellt werden kann und durch die Erfassung auch des Haltestroms des Antriebs bei stillstehender Antriebsmotorwelle ein Kriterium besteht für die Höhe der Rückstellkraft, sodass ein Absinken der Rückstellkraft unter den mit der Auslegungsrechnung ermittelten vorbestimmten Wert verhindert werden kann, indem der sich beispielsweise verschleißbedingt verändernde Abstand zwischen dem Wipphebelende und der ersten Kupplungsscheibe über die aktiv verstellbare Einrichtung nachgeregelt wird. Wird eine einen Verschleißvorgang ausgleichende selbstnachstellende Kupplung verwendet, so führt diese Kupplung nach einem bestimmten Belagverschleiß eine Selbstnachstellung durch, was wiederum zu einer Veränderung der Kupplungskennlinie führt und zu einer Veränderung des Abstands des Wipphebelendes relativ zur ersten Kupplungsscheibe der Kupplung. Mittels der nach der Erfindung vorgesehenen aktiv verstellbaren Einrichtung kann auch diese Abstandsveränderung ausgeglichen werden.

Um nun den Abstand verändern zu können, ist es nach der Erfindung vorgesehen, dass zur Veränderung des Abstands ein Schiebekeil an einer geneigten Fläche bewegbar ist und damit der an einer Drehachse angelenkte Wipphebelaktor relativ zur Kupplung lageveränderbar ist. Durch die Bewegung des Schiebekeils an der geneigten Fläche kann der an einer Drehachse angelenkte Wipphebelaktor um die Drehachse verschwenkt werden, sodass das Wipphebelende eine Abstandsveränderung relativ zur ersten Kupplungsscheibe der Kupplung erfährt. Entsprechend der Bewegungsrichtung des Schiebekeils an der geneigten Fläche kann auf diese Weise der Abstand des Wipphebelendes relativ zur ersten Kupplungsscheibe vergrößert oder verkleinert werden, also in beide Richtungen verändert werden, sodass einerseits einer ungewünschten Verringerung der von der Kupplung auf den Wipphebelaktor ausgeübten Rückstellkraft entgegengewirkt werden kann und andererseits auch einem unerwünschten Anstieg der Betätigungskraft des Antriebs entgegengewirkt werden, sodass dieser nicht mit Kraftwerten belastet wird, die in der Auslegungsrechnung unberücksichtigt geblieben sind.

Solange die vom Antrieb des Wipphebelaktors erzeugte Betätigungskraft bzw. die auf ihn wirkende Rückstellkraft die vorbestimmten Werte annimmt, ist der Abstand zwischen Wipphebelende und der ersten Kupplungsscheibe zumindest weitgehend konstant geblieben, bzw. die Veränderung sind nicht so groß, dass ein Nachregelvorgang notwendig wäre. Steigt aber die Betätigungskraft über die vorbestimmten Werte an bzw. verändert sich die auf den Antrieb wirkende Rückstellkraft so, dass sie unter den für ein sicheres Zurücklaufen des Wipphebelaktors erforderlichen Wert fällt, so kann dies beispielsweise durch eine Erfassung des Motorstroms des elektrischen Antriebs des Wipphebelaktors festgestellt werden.

Aufgrund des Belagverschleißes der Reibbeläge der Kupplung kann sich der Abstand zwischen dem Wipphebelende und der ersten Kupplungsscheibe vergrößert haben, sodass die Laufrolle des Wipphebelaktors durch den Antrieb entsprechend verlagert werden muss, was zu einer entsprechenden Veränderung der Betätigungskraft des Antriebs führt. Das Betätigungsmoment des Antriebs steigt, weshalb es nach der Erfindung vorgesehen ist, dass der Schiebekeil mittels einer mit dem Antrieb in Wirkverbindung stehenden Rutschkupplung betätigbar ist derart, dass eine Verlagerung des Schiebekeils nach dem Überschreiten eines vorbestimmten von der Rutschkupplung übertragbaren Antriebsmoments erfolgt.

Der Schiebekeil ist dabei zwischen einer, eine Lauffläche für die Laufrolle bildenden Grundplatte und einer an einem Gehäusebauteil ausgebildeten Keilfläche bewegbar und kann in Folge einer Betätigung der Kupplung geklemmt werden, wobei ein Winkel zwischen dem Schiebekeil und der Keilfläche derart ausgebildet ist, dass sich bei geschlossener Kupplung aufgrund der Kupplungskraft, also der Reaktionskraft der Kupplung aufgrund ihrer Betätigung, eine Selbsthemmung des Schiebekeils einstellt. Der Schiebekeil kann also aufgrund der Kupplungskraft nicht selbsttätig verschoben werden. Wird nun die Kupplung mittels des Wipphebelaktors zugedrückt, so wird der Schiebekeil zwischen der Grundplatte und der Keilfläche geklemmt. Bleibt das vom Antrieb bereitgestellte Antriebsmoment unterhalb des von der Rutschkupplung übertragbaren Antriebsmoment, so wird durch den Antrieb die Laufrolle und damit der Wipphebel bestimmungsgemäß betätigt.

Steigt nun augrund einer Veränderung der Kupplungskennlinie das vom Antrieb bereitgestellte Antriebsmoment über den von der Rutschkupplung übertragbaren Wert an, so wird dies nach der vorliegenden Erfindung dazu benutzt, den Schiebekeil zur Veränderung des Abstands des Wipphebelendes und der ersten Kupplungsscheibe zu verlagern.

Diese Verlagerungsbewegung kann aber aufgrund der Selbsthemmung des Schiebekeils nicht während des Zudrückens der Kupplung stattfinden, sondern erst dann, wenn die von der Kupplung als Reaktionskraft erzeugte Kupplungskraft auf den Schiebekeil soweit verringert worden ist, dass die Selbsthemmung des Schiebekeils zwischen der Grundplatte und der Keilfläche am Gehäusebauteil so gering geworden ist, dass der Schiebekeil verlagert werden kann.

Um nun den Schiebekeil verlagern zu können, ist es nach der vorliegenden Erfindung vorgesehen, dass der Schiebekeil zur Vergrößerung des Abstands des Wipphebelendes relativ zur ersten Kupplungsscheibe der Kupplung mittels einer sich entspannenden Druckfeder verlagerbar ist, deren Komprimierung beim Überschreiten des von der Rutschkupplung übertragbaren Antriebsmoments stattfindet. Es bedeutet dies mit anderen Worten, dass dann, wenn das Antriebsmoment des Antriebs den von der Rutschkupplung übertragbaren Wert übersteigt, eine Druckfeder aufgespannt wird, die dann, wenn der Schiebekeil nicht mehr zwischen Grundplatte und Keilfläche eingeklemmt ist, zu einer Verschiebung des Schiebekeils führt und damit zu einer Vergrößerung des Abstands des Wipphebelendes relativ zur ersten Kupplungsscheibe.

Nach einer Weiterbildung der Erfindung ist es vorgesehen, dass die Rutschkupplung ein mit dem Antrieb drehfest verbundenes erstes Rutschkupplungsgehäuse besitzt, an dem eine Umlaufvertiefung ausgebildet ist, die zum Abrollen von Wälzkörpern ausgebildet ist, die in Vertiefungen einer Tellerfeder angeordnet sind und die die Vertiefungen beim Überschreiten des von der Rutschkupplung übertragbaren Antriebsmoments verlassen. Bleibt das vom Antrieb bereitgestellte Antriebsmoment unterhalb des Schwellenwerts der Rutschkupplung, so treibt der Antrieb des Wipphebelaktors die Laufrolle und den Wipphebel an. Zusammen mit dieser Drehbewegung dreht sich auch die unter Vorspannung eingebaute Druckfeder und erfährt keine Druckkraftveränderung. Kommt es nun zu einem Überschreiten des von der Rutschkupplung übertragbaren Antriebsmoments, so verlassen die Wälzkörper die Vertiefungen der Tellerfeder und die Druckfeder wird über einen nachfolgend noch näher beschriebenen Mechanismus weiter zusammengedrückt, speichert also die Energie, die sie später zum Verlagern des Schiebekeils freigibt, wenn der Schiebekeil nicht mehr der Selbsthemmungswirkung zwischen der Grundplatte und der Keilfläche unterliegt, also beispielsweise der den Antriebsmotor beaufschlagende Stromwert verringert wird und es aufgrund der Rückstellkraft der Kupplung zu einem Öffnen der Kupplung kommt und damit die den Schiebekeil zwischen der Grundplatte und der Keilfläche beaufschlagende Klemmkraft verringert wird, was dazu führt, dass die in der Druckfeder gespeicherte Energie während der Entspannung der Druckfeder dafür sorgt, dass der Schiebekeil entsprechend verlagert werden kann.

Um nun die Druckfeder spannen, d. h. komprimieren zu können, ist nach der Erfindung vorgesehen, dass die Rutschkupplung ein mit dem ersten Rutschkupplungsgehäuseteil mittels einer Laschen-Nut-Verbindung drehfest verbundenes und axial verlagerbares zweites Rutschkupplungsgehäuseteil besitzt, welches einen scheibenförmigen Körper mit einem daran festgelegten rohrstückförmigen Körper besitzt, an dem in Axiallängsrichtung verlaufende Nuten ausgebildet sind und zungenförmige Körperbauteile zwischen den Nuten komplementär ausgebildete Öffnungen einer Mutter durchsetzen, die mit einem Innengewinde an einer mit einem Außengewinde versehenen Innenhülse angeordnet ist derart, dass sich die Mutter zusammen mit der sich drehenden Innenhülse dreht, solange die Rutschkupplung Antriebsmoment überträgt und zwischen der Mutter und der Innenhülse beim Überschreiten des von der Rutschkupplung übertragbaren Antriebsmoments eine Relativdrehung und eine Längsbewegung der Mutter relativ zur Innenhülse stattfindet und damit die Druckfeder komprimierbar ist.

Überschreitet daher das von der Rutschkupplung übertragene Antriebsmoment einen vorbestimmten Wert nicht, so dreht sich die Mutter zusammen mit der Innenhülse und die Druckfeder behält ihren vorgespannten Zustand bei und wird nicht weiter zusammengedrückt. Überschreitet aber das vom Antrieb bereitgestellte Antriebsmoment das von der Rutschkupplung übertragbare Antriebsmoment, so führt dies dazu, dass es zwischen der mit einem Außengewinde versehenen Innenhülse und der mit einem Innengewinde versehenen Mutter eine Relativdrehung stattfindet, die zu einer Längsbewegung der Mutter auf der Innenhülse führt und auf diese Weise die Druckfeder weiter zusammengedrückt wird und damit die Energie speichert, die sie dann, wenn der Schiebekeil zwischen der Grundplatte und der Keilfläche nicht mehr festgeklemmt ist, freigibt und damit den Schiebekeil zur Vergrößerung des Abstands zwischen dem Wipphebelende und der ersten Kupplungsscheibe der Kupplung verschiebt.

Es ist also nach einer Weiterbildung der Erfindung vorgesehen, dass die Längsbewegung der Mutter relativ zur Innenhülse zur Komprimierung der Druckfeder führt, die zwischen einer Anlauffläche einer Spannhülse und Laschen eines relativ zur Spannhülse axial verlagerbaren und damit weitgehend drehfest verbundenen.Traversengehäuses angeordnet ist, wobei das Traversengehäuse mittels eines insbesondere bajonettartigen Verschlusses mit dem Schiebekeil gekoppelt ist derart, dass eine Axialverlagerung des Traversengehäuses zu einer Verlagerung des selbsthemmungsfreien Schiebeteils führt. Die Druckfeder wird also durch die Längsbewegung der Mutter zwischen der Spannhülse und dem Traversengehäuse komprimiert und speichert damit potenzielle Energie. Das Traversengehäuse ist mittels eines bajonettartigen Verschlusses mit dem Schiebekeil gekoppelt, sodass die Verlagerung des Traversengehäuses zu einer Verlagerung des Schiebekeils führt. Hat nun die Druckfeder Energie gespeichert und führt ein Öffnen der Kupplung - der Haltestrom des Antriebs des Wipphebelaktors wird verringert - zu einer Verringerung der Klemmkraft auf den Schiebekeil zwischen der Grundplatte und der Keilfläche, so entspannt sich die Druckfeder und verschiebt dabei das Traversengehäuse und damit auch den Schiebekeil. Mittels einer solchen Verlagerung des Schiebekeils kann beispielsweise eine Wegstrecke von lediglich beispielshalber zu nennenden 0,2 mm zurückgelegt werden. Hat die selbstnachstellende Kupplung einen Verschleißausgleichsvorgang durchgeführt, so kann dies zu einer Abstandsverringerung zwischen dem Wipphebelende und der ersten Kupplungsscheibe der Kupplung von beispielsweise 1.0 mm führen, sodass diese Abstandsverringerung durch eine fünfmalige Wiederholung der Verlagerung des Schiebekeils um jeweils 0.2 mm ausgeglichen werden kann. Zu diesem Zweck wird der Antrieb so angesteuert, dass er - dies kann beispielsweise nach dem Starten des Verbrennungsmotors eines mit dem Wipphebelaktor ausgestatteten Fahrzeugs während des Stillstands, also bei nicht eingelegter Fahrstufe stattfinden - einen solchen Nachstellvorgang fünfmal hintereinander durchführt und somit die Abstandsverringerung zwischen dem Wipphebelende und der ersten Kupplungsscheibe der Kupplung aufgrund des Nachstellvorgangs der selbstnachstellenden Kupplung ausgeglichen wird.

Nach einer Weiterbildung der Erfindung ist die Innenhülse des Wipphebelaktors mit einer darin drehfest angeordneten Spindel eines Kugelumlauftriebs versehen, sodass die Drehung der Spindel zu einer Verlagerung der Laufrolle an der Grundplatte führt. Die Innenhülse ist dabei mittels Wälzkörpern relativ zum zweiten Rutschkupplungsgehäuseteil drehbar gelagert und das zweite Rutschkupplungsgehäuseteil ist mittels Wälzkörpern relativ zu einem Gehäuse des Antriebs drehbar gelagert.

Auch ist die Mutter mittels Wälzlagerkörper relativ zum Traversengehäuse und zur Spannhülse drehbar gelagert.

Mit der aktiv verstellbaren Einrichtung kann der Abstand zwischen dem Wipphebelende und der ersten Kupplungsscheibe der Kupplung in beide Richtung verändert werden. Mit der Entspannung der gespannten Druckfeder wird eine Verlagerung des Schiebekeils zur Herbeiführung einer Vergrößerung des Abstands bewirkt, indem der Schiebekeil vom Antrieb des Wipphebelaktors betrachtet von diesem weg bewegt wird. Wird nun beispielsweise über eine Erfassung des Haltestroms des Antriebs des Wipphebelaktors festgestellt, dass die von der Kupplung auf ihn ausgeübte Rückstellkraft unterhalb des vorbestimmten Werts gefallen ist, so hat sich der Abstand zwischen dem Wipphebelende und der ersten Kupplungsscheibe soweit vergrößert, dass sich die Neigung des Wipphebels und damit der Wipphebelkurve dahingehend verändert hat, dass die Rückstellkraft zu klein geworden ist. Um nun auch in diese Richtung einen Nachstellvorgang ausführen zu können, ist es nach der vorliegenden Erfindung vorgesehen, dass an der Grundplatte ein Anschlag vorgesehen ist, gegen den die Laufrolle in Anlage bringbar ist derart, dass eine weitere Betätigung des Antriebs dazu führt, dass das von der Rutschkupplung übertragbare Antriebsmoment überschritten ist und in Folge dessen die Mutter eine Relativbewegung zur Innenhülse erfährt und somit das Traversengehäuse und damit der Schiebekeil eine Verlagerung axial in Richtung zum Antrieb erfahren und damit der Abstand des Wipphebelendes relativ zur ersten Kupplungsscheibe der Kupplung eine Verkleinerung erfährt.

Damit kann mittels des erfindungsgemäßen Wipphebelaktors der Abstand zwischen dem Wipphebelende und der ersten Kupplungsscheibe der Kupplung in beide Richtungen aktiv verändert werden und somit können Verschiebungen der Kupplungskennlinie auch in beide Richtungen ausgeglichen werden und damit erreicht werden, dass eine erhöhte Betätigungskraft des Antriebs des Wipphebelaktors vermieden wird.

Die Erfindung wird nun im Folgenden anhand der Zeichnung näher erläutert. Diese zeigt in:
Fig. 1 eine teilweise geschnittene, perspektivische Darstellung einer Ausführungsform eines Wipphebelaktors nach der vorliegenden Erfindung;
Fig. 2 eine Längsschnittansicht des Wipphebelaktors nach Fig. 1 in einer Stellung mit nach links verschobenem Schiebekeil;
Fig. 3 eine Darstellung ähnlich Fig. 2, mit einem in Richtung nach rechts verschobenen Schiebekeil;
Fig. 3a eine vergrößerte perspektivische Darstellung eines Ausschnitts aus Fig. 1;
Fig. 4 eine perspektivische Darstellung des Schiebekeils;
Fig. 5 eine perspektivische Darstellung einer Grundplatte;
Fig. 6 eine perspektivische Darstellung einer Innenhülse;
Fig. 7 eine perspektivische Darstellung einer Mutter;
Fig. 8 eine perspektivische Darstellung eines zweiten Rutschkupplungsgehäuseteils;
Fig. 9 eine perspektivische Darstellung einer Spannhülse;
Fig. 10 eine perspektivische Darstellung eines Traversengehäuses;
Fig. 11 eine perspektivische Darstellung einer Tellerfeder; und
Fig. 12 eine perspektivische Darstellung eines ersten Rutschkupplungsgehäuseteils.

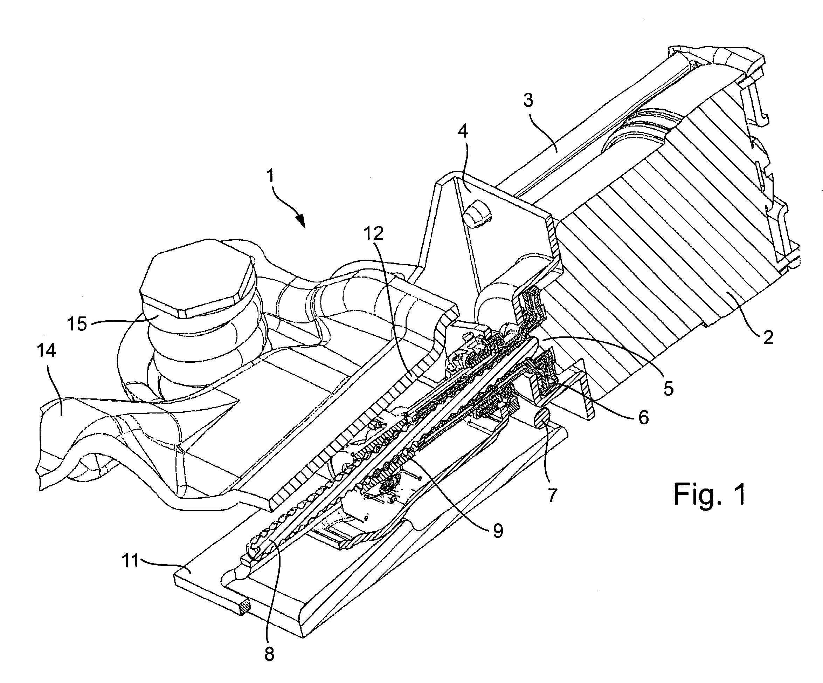

Fig. 1 der Zeichnung zeigt in einer perspektivischen und teilweise geschnittenen Darstellung einen Wipphebelaktor 1 gemäß einer Ausführungsform nach der vorliegenden Erfindung. Der Wipphebelaktor 1 weist einen Antrieb in der Form eines Elektromotors 2 auf. Der Antrieb 2 ist dabei über eine Verschraubung 3 an einem Haltebauteil 4 festgelegt. An einer Abtriebswelle 5 des Antriebs 2 ist eine Rutschkupplung 6 drehfest festgelegt.

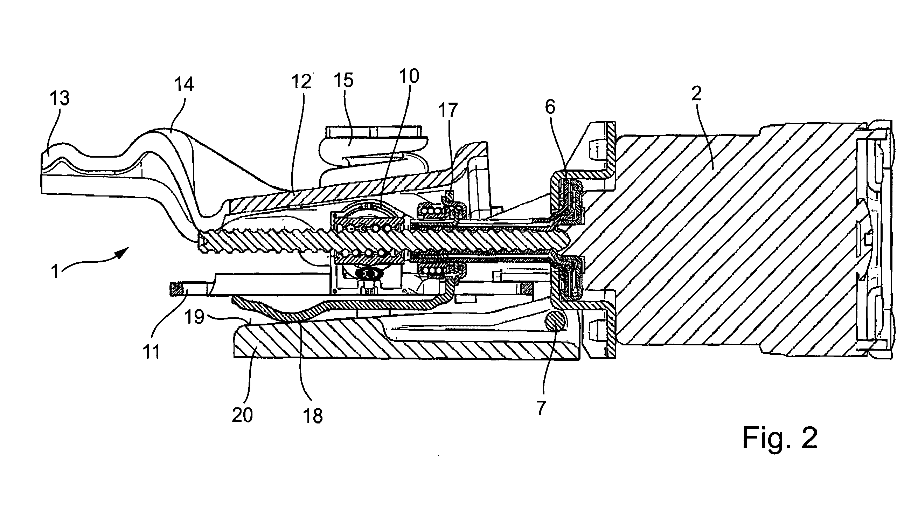

Der Wipphebelaktor 1 ist an einer Drehachse 7 drehbar angelenkt, sodass der Wipphebelaktor 1 insgesamt an der Drehachse 7 verschwenkt werden kann. Eine Drehbewegung der Abtriebswelle 5 führt über die Rutschkupplung 6 zu einer Drehbewegung einer Spindel 8, die die Spindel eine Kegelumlauftriebs 9 ist, wobei eine Laufrolle 10 (siehe Fig. 2) eines Laufrollenpaars so mit dem Kegelumlauftrieb 9 verbunden ist, dass die Drehung der Spindel 8 zu einer Verlagerungsbewegung der Laufrolle 10 durch Abrollen an einer Grundplatte 11 und einer geneigt ausgebildeten Wipphebelkurve 12 führt, sodass eine Verlagerung der Laufrolle 10 zu einem Anheben oder Absenken eines Wipphebelendes 13 eines Wipphebels 14 führt.

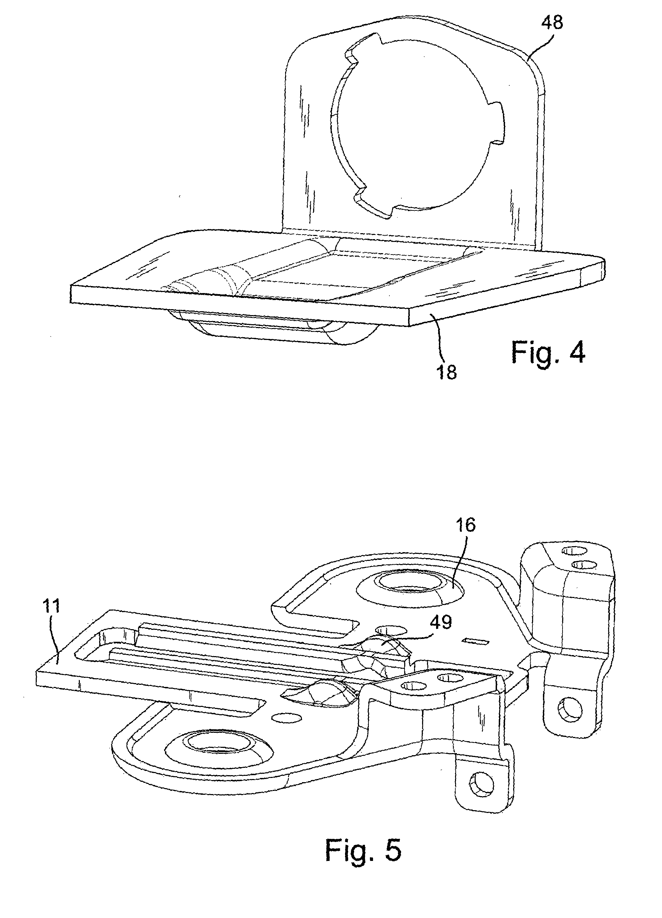

Der Wipphebel 14 wird von einer Feder 15 beaufschlagt, die sich an einer Federabstützung 16 (siehe Fig. 5) der Grundplatte 11 abstützt.

Über die Verlagerung der Laufrolle 10 und das Anheben oder Absenken des Wipphebelendes 13 kann die nicht näher dargestellte Kupplung durch Beaufschlagung eines Kupplungsausrücklagers zugedrückt werden.

Wenn nun der Abstand des Wipphebelendes 13 zur ersten Kupplungsscheibe der Kupplung verändert werden soll, so kann der Wipphebelaktor 1 an der Drehachse 7 eine Schwenkbewegung um einen kleinen Winkelbereich ausführen. Zu diesem Zweck wird über den Elektromotor 2 und die Rutschkupplung 6 eine aktiv verstellbare Einrichtung 17 betätigt. Die Einrichtung 17 besitzt einen Schiebekeil 18, der sich einerseits an der Grundplatte 11 und andererseits an einer Keilfläche 19 abstützt, die bei der vorliegenden Ausführungsform an einem Gehäusebauteil 20 in der Form einer Kupplungsglocke oder dergleichen ausgebildet ist. Fig. 2 der Zeichnung zeigt dabei eine Position der Einrichtung 17 und des Schiebekeils 18, die den Abstand des Wipphebelendes 13 zur ersten Kupplungsscheibe der Kupplung vergrößert, indem der Schiebekeil 18 vom Elektromotor 2 weg bewegt wird und zwar entlang der Keilfläche 19, was zu einer Absenkbewegung des Wipphebelendes 13 und Verschenkbewegung des Wipphebelaktors 1 an der Drehachse 7 führt.

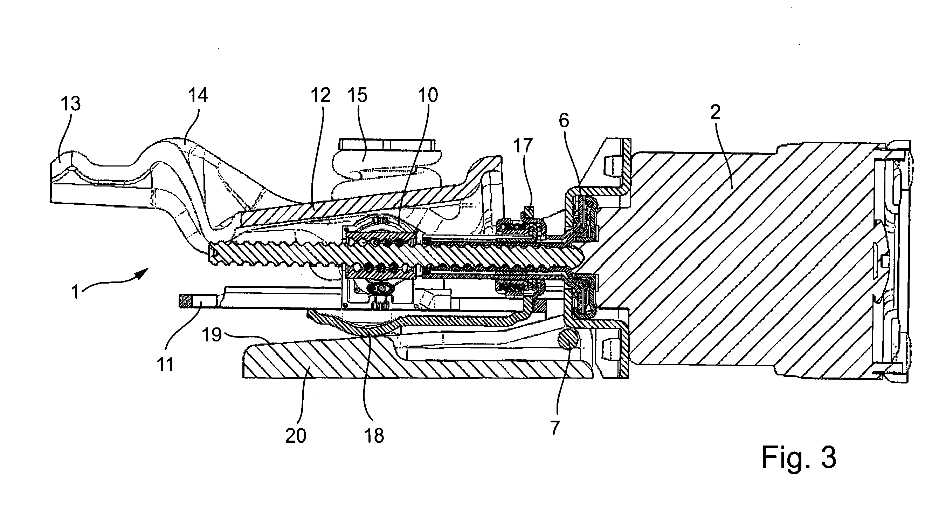

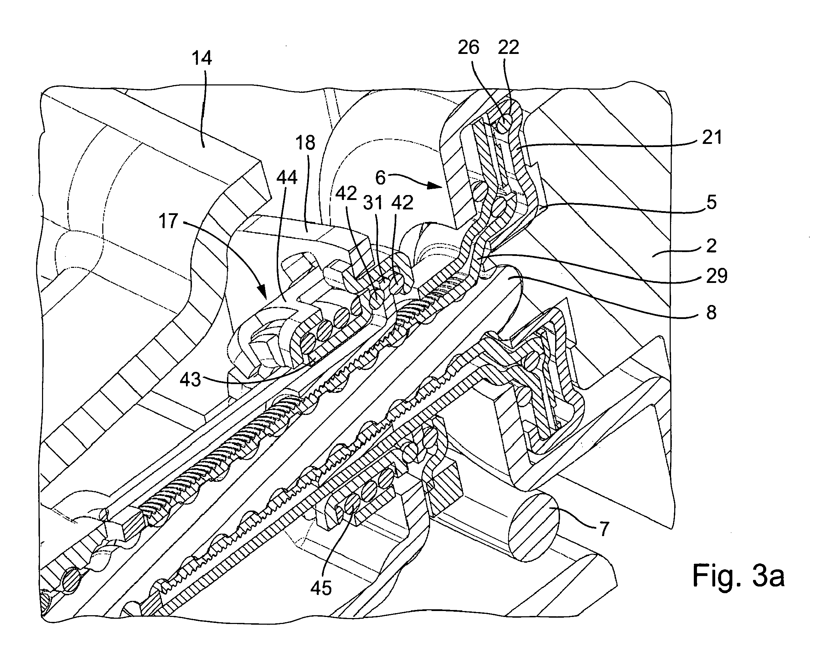

Fig. 3 der Zeichnung zeigt eine Darstellung ähnlich Fig. 2 mit in die entgegengesetzte Richtung verlagertem Schiebekeil 18, sodass der Wipphebelaktor 1 wiederum an der Drehachse 7 eine Verschwenkbewegung durchführt, die zu einem Anheben des Wipphebelendes 13 relativ zur Horizontalen führt und damit zu einer Verringerung des Abstandes des Wipphebelendes 13 zur nicht näher dargestellten Kupplungsscheibe der ebenfalls nicht näher dargestellten Kupplung.

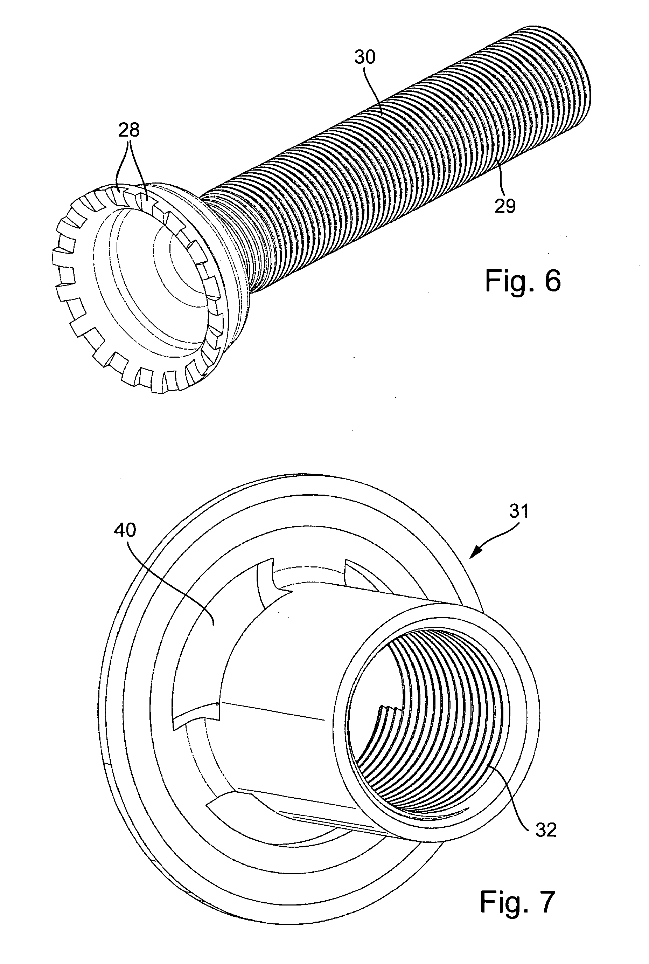

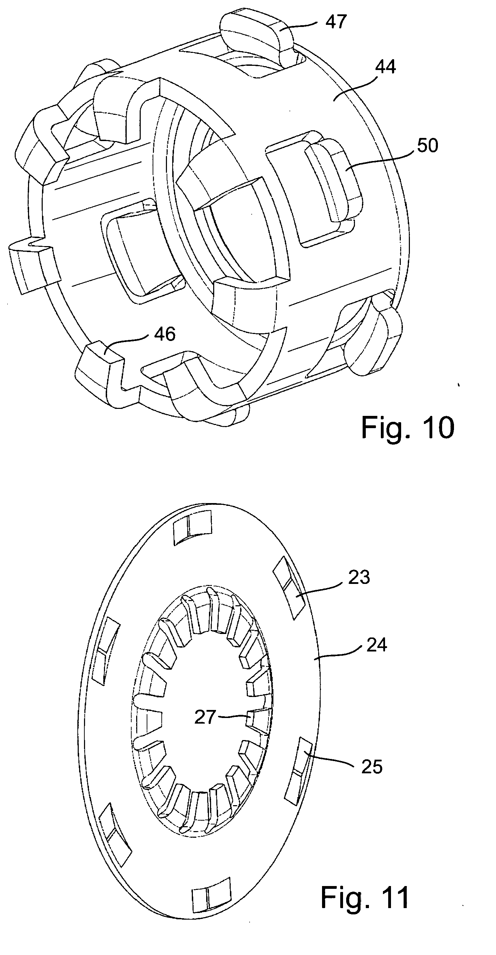

Fig. 3a zeigt ein vergrößerte Darstellung der Rutschkupplung 6 und der aktiv verstellbaren Einrichtung 17. An der Abtriebswelle 5 des Elektromotors 2 ist ein erstes Rutschkupplungsgehäuseteil 21 drehfest festgelegt. Dieses erste Rutschkupplungsgehäuseteil 21 besitzt eine Umlaufvertiefung 22, in der Kugeln 26 in der Form von beispielsweise Wälzlagerkörpern abwälzen können. Die Kugeln 26 befinden sich ebenfalls in Vertiefungen 23 einer in Fig. 11 dargestellten Tellerfeder 24 angeordnet und können über rampenförmige Flächen 25 aus den Vertiefungen 23 herauslaufen. Dieses Herauslaufen der Kugeln 26 aus den Vertiefungen findet dann statt, wenn das vom Elektromotor 2 bereitgestellte Antriebsmoment das von der Rutschkupplung 6 übertragbare vorbestimmte Antriebsmoment übersteigt. Befinden sich die Kugeln 26 in den Vertiefungen 23, so führt eine Drehbewegung der Abtriebswelle 5 des Elektromotors 2 über die Tellerfederzungen 27 der Tellerfeder 24, die sich mit Ausnehmungen 28 einer Innenhülse 29 (siehe Fig. 6) im Eingriff befinden, zu einer entsprechenden Drehbewegung der Innenhülse 29. Im Inneren der Innenhülse 29 ist die Spindel 8 drehfest festgelegt, sodass durch die Drehbewegung der Innenhülse 8 auch die Spindel 8 in eine Drehbewegung versetzt wird und damit der Kegelumlauftrieb 9 zur Betätigung der Laufrolle 10 angetrieben werden kann.

Die Innenhülse 29 besitzt ein Außengewinde 30, an dem eine näher in Fig. 7 dargestellte Mutter 31 über ein Innengewinde 32 angeordnet werden kann.

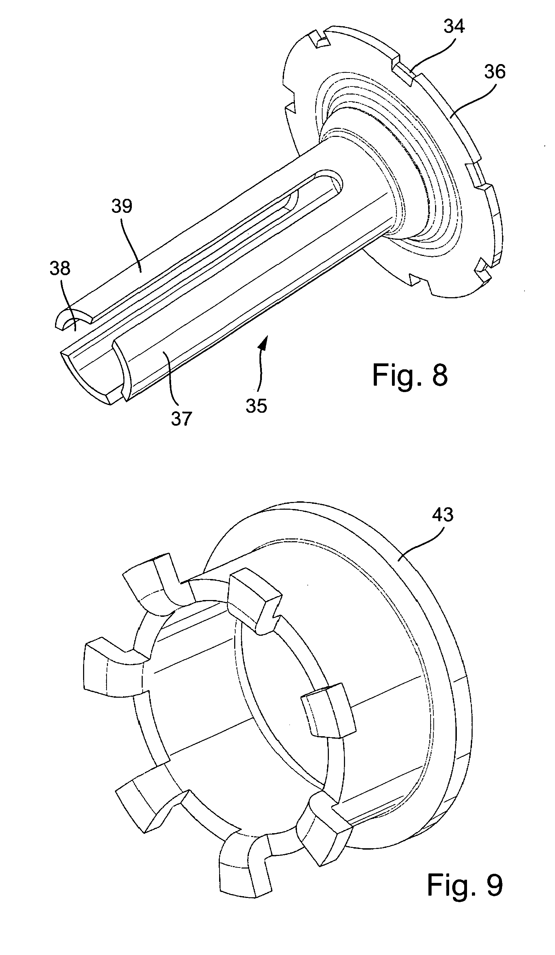

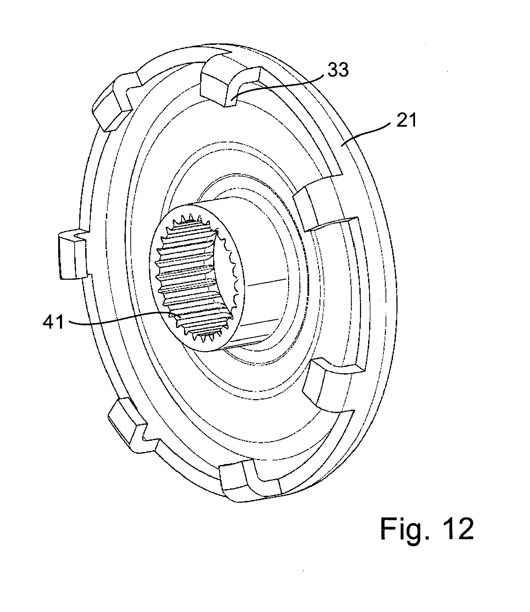

Solange über die Rutschkupplung 6 ein Antriebsmoment kleiner als das von ihr maximal übertragbare Antriebsmoment übertragen wird, dreht sich die Mutter 31 zusammen mit der Innenhülse 29. Diese Drehbewegung wird dabei dadurch erreicht, dass sich das näher anhand von Fig. 12 ersichtliche erste Rutschkupplungsgehäuseteil 21 mit seinen Laschen 33 im Eingriff befindet mit Nuten 34 eines näher anhand von Fig. 8 ersichtlichen zweiten Rutschkupplungsgehäuseteils 35. Eine Drehbewegung des ersten Rutschkupplungsgehäuseteils 21 führt daher aufgrund der Laschen-Nut-Verbindung zu einer entsprechenden Drehbewegung des zweiten Rutschkupplungsgehäuseteils 35 mit einem scheibenförmigen Körper 36, an dem die Nuten 34 ausgebildet sind und einem daran festgelegten rohrstückförmigen Körper 37. Dieser rohrstückförmige Körper 37 besitzt in Axiallängsrichtung verlaufende Nuten 38, die zwischen zungenförmigen Körperbauteilen 39 verlaufen. Das zweite Rutschkupplungsgehäuseteil 35 durchsetzt mit seinen zungenförmigen Körperbauteilen 39 komplementär ausgebildete Öffnungen 40 der in Fig. 7 dargestellten Mutter 31.

Über eine von der Abtriebswelle 5 mittels einer Wellen-Naben-Verbindung 41 auf das erste Rutschkupplungsgehäuseteil 21 übertragene Drehbewegung führt damit über die Laschen 33 und Nuten 34 zu einer entsprechenden Drehbewegung des zweiten Rutschkupplungsgehäuseteils 35 und über die zungenförmigen Körperbauteile 39 zu einer entsprechenden Drehbewegung der Mutter 31. Die Mutter 31 stützt sich über Wälzlagerkörper 42 axial in beide Richtungen ab und zwar einerseits gegen die in Fig. 9 näher dargestellte Spannhülse 43 und andererseits gegen ein in Fig. 10 näher dargestelltes Traversengehäuse 44.

Zwischen der Spannhülse 43 und dem Traversengehäuse 44 befindet sich eine Druckfeder 45 mit Vorspannung eingebaut. Überschreitet nun das vom Elektromotor 2 bereitgestellte Antriebsmoment das von der Rutschkupplung 6 übertragbare Antriebsmoment, so führt dies dazu, dass die Kugeln 26 aus den Vertiefungen 23 der Tellerfeder 24 über die Rampenflächen 25 herauswandern und somit die Tellerfeder 24 die Innenhülse 29 nicht mehr mitnimmt und in Drehung versetzt.

Da aber das erste Rutschkupplungsgehäuseteil 21 über die Laschen 33 und die Nuten 34 mit dem zweiten Rutschkupplungsgehäuseteil 35 im Eingriff steht, dreht sich dieses zweite Rutschkupplungsgehäuseteil 35 aufgrund der weiter sich drehenden Abtriebswelle 5 des Elektromotors 2 weiter. Dies führt über die zungeförmigen Körperbauteile 39 zu einer weiteren Beaufschlagung der Mutter 41 zu einer Drehbewegung, die dann eine Relativbewegung zur Innenhülse 29 ausführt und zwar über das Innengewinde 32. Da der Schiebekeil 18 zwischen der Grundplatte 11 und der Keilfläche 19 aufgrund der von der geschlossenen Kupplung als Reaktionskraft darauf wirkenden Kupplungskraft eingeklemmt ist und der Winkel so ausgebildet ist, dass Selbsthemmung auftritt, führt diese dann stattfindende Axialverlagerung der Mutter 31 an der Innenhülse 29 zu einem Zusammendrücken der Druckfeder 45, die diese Energie speichert.

Wird nun die Kupplung geöffnet und zu diesem Zweck der den Elektromotor 2 beaufschlagende Haltestrom verringert, so führt dies zu einem Absinken der den Schiebekeil 18 zwischen der Grundplatte 11 und der Keilfläche 19 beaufschlagenden Klemmkraft. Sobald die von der Druckfeder 45 erzeugte Federkraft ausreicht, den Schiebekeil 18 in Richtung der linken Zeichnungshälfte in Fig. 2 zu verlagern, führt dies zusammen mit der Entspannung der Druckfeder 45 zu einer Verlagerungsbewegung des Schiebekeils 18 entlang der Keilfläche 19, da sich die Druckfeder 45 gegen die Laschen 46 des Traversengehäuses 44 abstützt und dieses ebenfalls in Richtung nach links gemäß Fig. 2 beaufschlagt.

Diese Bewegung des Traversengehäuses 44 führt über die Laschen 47 zu einer Kraftbeaufschlagung der Rückwand 48 des näher in Fig. 4 der Zeichnung dargestellten Schiebekeils 18. Durch eine entsprechende mehrfache Wiederholung des Vorgangs des Zudrückens der Kupplung mit einem entsprechenden Zusammendrücken der Druckfeder 45 und einer nachfolgenden Entspannung der Druckfeder 45 kann der Schiebekeil 18 an der Keilfläche 19 weiter in Richtung nach links in Fig. 2 verlagert werden und somit das Wipphebelende 13 abgesenkt werden und somit der Abstand des Wipphebelendes 13 zur nicht näher dargestellten Kupplungsscheibe vergrößert werden.

Wird nun beispielsweise über eine Erfassung des den Elektromotor 2 beaufschlagenden Haltestroms festgestellt, dass dieser Haltestrom einen vorbestimmten Schwellenwert unterschritten hat, so kann daraus geschlossen werden, dass die von der Kupplung auf den Wipphebelaktor ausgeübte Rückstellkraft abgenommen hat.

Um nun diesem Vorgang entgegen zu wirken, kann der Elektromotor 2 zur Drehrichtungsumkehr beaufschlagt werden, was zu einem Zurücklaufen der Laufrolle 10 an der Grundplatte 11 und der Wipphebelkurve 12 in Richtung zum Elektromotor 2 hin führt, bis die Laufrolle 10 mit einem an der Grundplatte 11 ausgebildeten Anschlag 49 in Anlage kommt. Eine weitere Bestromung des Elektromotors 2 führt dazu, dass das von der Rutschkupplung 6 übertragbare Antriebsmoment überschritten wird und die Mutter 31 an der Innenhülse 29 in Richtung zum Elektromotor 2 hin axial verlagert wird und dabei über die Wälzlagerkörper 42 und das Traversengehäuse 44 sowie die daran ausgebildeten und näher anhand von Fig. 10 ersichtlichen Laschen 50 den Schiebekeil 18 in Richtung zum Elektromotor 2 hin verlagert und damit der Wipphebelaktor 1 an der Drehachse 7 eine Verschwenkbewegung durchführt, die zu einem Anheben des Wipphebelendes 13 in Fig. 2 führt. Damit verringert sich der Abstand des Wipphebelendes 13 zur Kupplungsscheibe und die von der Kupplung auf den Wipphebelaktor ausgeübte Rückstellkraft steigt an.

Hinsichtlich vorstehend im Einzelnen nicht näher erläuterter Merkmale der Erfindung wird im Übrigen auf die Ansprüche und die Zeichnung verwiesen.

### Bezugszeichenliste

- 1: Wipphebelaktor
- 2: Elektromotor
- 3: Verschraubung
- 4: Haltebauteil
- 5: Abtriebswelle
- 6: Rutschkupplung
- 7: Drehachse
- 8: Spindel
- 9: Kugelumlauftrieb
- 10: Laufrolle
- 11: Grundplatte
- 12: Wipphebelkurve
- 13: Wipphebelende
- 14: Wipphebel
- 15: Feder
- 16: Federabstützung
- 17: aktiv verstellbare Einrichtung
- 18: Schiebekeil
- 19: Keilfläche
- 20: Gehäusebauteil
- 21: erstes Rutschkupplungsgehäuseteil
- 22: Umlaufvertiefung
- 23: Vertiefung
- 24: Tellerfeder
- 25: rampenförmige Fläche
- 26: Kugeln
- 27: Tellerfederzungen
- 28: Ausnehmung
- 29: Innenhülse
- 30: Außengewinde
- 31: Mutter
- 32: Innengewinde
- 33: Laschen
- 34: Nuten
- 35: zweites Rutschkupplungsgehäuseteil
- 36: Körper
- 37: rohrstückförmiger Körper
- 38: Nuten
- 39: zungenförmige Körperbauteile
- 40: Öffnungen
- 41: Wellen-Naben-Verbindung
- 42: Wälzlagerkörper
- 43: Spannhülse
- 44: Traversengehäuse
- 45: Druckfeder
- 46: Laschen
- 47: Laschen
- 48: Rückwand
- 49: Anschlag
- 50: Laschen

## Patentansprüche

1. Wipphebelaktor, insbesondere zur Betätigung einer Kupplung eines Fahrzeuges, mit mindestens einem, eine veränderliche Betätigungskraft zum Öffnen und/oder Schließen der Kupplung ausübenden Wipphebel (14), der mittels einer Feder (15) beaufschlagbar ist und bei dem ein Hebeldrehpunkt des Wipphebels (14) durch Verlagerung einer mittels eines Antriebs (2) betätigten Laufrolle (10) verlagerbar ist, an der der Wipphebel (14) über eine geneigte Wipphebelkurve (12) abgestützt ist, **dadurch gekennzeichnet, dass** der Wipphebelaktor (1) eine aktiv verstellbare Einrichtung (17) besitzt, die zum Ausgleich einer Veränderung des Kraft-Weg-Verhaltens der Kupplung einen Abstand eines Wipphebelendes (13) relativ zu einer ersten Kupplungsscheibe der Kupplung verändert.

2. Wipphebelaktor nach Anspruch 1, **dadurch gekennzeichnet, dass** die Einrichtung (17) mittels des Antriebs (2) des Wipphebelaktors (1) betätigbar ist.

3. Wipphebelaktor nach Anspruch 1 oder 2, **dadurch gekennzeichnet, dass** der Abstand in Abhängigkeit der vom Antrieb (2) bereit gestellten Betätigungskraft veränderbar ist.

4. Wipphebelaktor nach einem der vorstehenden Ansprüche, **dadurch gekennzeichnet, dass** zur Veränderung des Abstands ein Schiebekeil (18) an einer geneigten Fläche (19) bewegbar ist und damit der an einer Drehachse (7) angelenkte Wipphebelaktor (1) relativ zur Kupplung lageveränderbar ist.

5. Wipphebelaktor nach Anspruch 4, **dadurch gekennzeichnet, dass** der Schiebekeil (18) mittels einer mit dem Antrieb (2) in Wirkverbindung stehenden Rutschkupplung (6) betätigbar ist derart, dass eine Verlagerung des Schiebekeils (18) nach dem Überschreiten eines vorbestimmten von der Rutschkupplung (6) übertragbaren Antriebsmoments erfolgt.

6. Wipphebelaktor nach Anspruch 4 oder 5, **dadurch gekennzeichnet, dass** der Schiebekeil (18) zwischen einer, eine Lauffläche für die Laufrolle (10) bildenden Grundplatte (11) und einer an einem Gehäusebauteil (20) ausgebildeten Keilfläche (19) bewegbar und in Folge einer Betätigung der Kupplung klemmbar ist, wobei ein Winkel zwischen dem Schiebekeil (18) und der Keilfläche (19) derart ausgebildet ist, dass sich bei geschlossener Kupplung aufgrund der Kupplungskraft eine Selbsthemmung des Schiebekeils (18) einstellt.

7. Wipphebelaktor nach einem der Ansprüche 4 bis 6, **dadurch gekennzeichnet, dass** der Schiebekeil (18) zur Vergrößerung des Abstands des Wipphebelendes (13) relativ zur ersten Kupplungsscheibe der Kupplung mittels einer sich entspannenden Druckfeder (45) verlagerbar ist, deren Komprimierung beim Überschreiten des von der Rutschkupplung (6) übertragbaren Antriebsmoments stattfindet.

8. Wipphebelaktor nach einem der Ansprüche 5 bis 7, **dadurch gekennzeichnet, dass** die Rutschkupplung (6) ein mit dem Antrieb (2) drehfest verbundenes erstes Rutschkupplungsgehäuseteil (21) besitzt, an dem eine Umlaufvertiefung (22) ausgebildet ist, die zum Abrollen von Wälzkörpern (26) ausgebildet ist, die in Vertiefungen (23) einer Tellerfeder (24) angeordnet sind und die die Vertiefungen (23) beim Überschreiten des von der Rutschkupplung (6) übertragbaren Antriebsmoments verlassen.

9. Wipphebelaktor nach einem der Ansprüche 5 bis 8, **dadurch gekennzeichnet, dass** die Rutschkupplung (6) ein mit dem ersten Rutschkupplungsgehäuseteil (21) mittels einer Laschen-Nut-Verbindung drehfest verbundenes und axial verlagerbares zweites Rutschkupplungsgehäuseteil (35) besitzt, welches einen scheibenförmigen Körper (36) mit einem daran festgelegten rohrstückförmigen Körper (37) besitzt, an dem in Axiallängsrichtung verlaufende Nuten (38) ausgebildet sind und zungenförmige Körperbauteile (39) zwischen den Nuten (38) komplementär ausgebildete Öffnungen (40) einer Mutter (41) durchsetzen, die mit einem Innengewinde (32) an einer mit einem Außengewinde (30) versehenen Innenhülse (29) angeordnet ist derart, dass sich die Mutter (41) zusammen mit der sich drehenden Innenhülse (29) dreht, solange die Rutschkupplung (6) Antriebsmoment überträgt und zwischen der Mutter (41) und der Innenhülse (29) beim Überschreiten des von der Rutschkupplung (6) übertragbaren Antriebsmoments eine Relativdrehung und eine Längsbewegung der Mutter (41) relativ zur Innenhülse (2) stattfindet und damit die Druckfeder (45) komprimierbar ist.

10. Wipphebelaktor nach Anspruch 10, **dadurch gekennzeichnet, dass** die Längsbewegung der Mutter (41) relativ zur Innenhülse (29) zur Komprimierung der Druckfeder (45) führt, die zwischen einer Anlauffläche einer Spannhülse (43) und Laschen (46) eines relativ zur Spannhülse (43) axial verlagerbaren und damit weitgehend drehfest verbundenen Traversengehäuses (44) angeordnet ist, wobei das Traversengehäuse (44) mittels eines insbesondere bajonettartigen Verschlusses mit dem Schiebekeil (18) gekoppelt ist derart, dass eine Axialverlagerung des Traversengehäuses (44) zu einer Verlagerung des selbsthemmungsfreien Schiebekeils (18) führt.

11. Wipphebelaktor nach Anspruch 9 oder 10, **dadurch gekennzeichnet, dass** die Innenhülse (29) mit einer darin drehfest angeordneten Spindel (8) eines Kugelumlaufspindeltriebs (9) versehen ist, so dass die Drehung der Spindel (8) zu einer Verlagerung der Laufrolle (10) an der Grundplatte (11) führt.

12. Wipphebelaktor nach einem der vorstehenden Ansprüche, **dadurch gekennzeichnet, dass** die Innenhülse (29) mittels Wälzlagerkörper relativ zum zweiten Rutschkupplungsgehäuseteil (35) drehbar ist und das zweite Rutschkupplungsgehäuseteil (35) mittels Wälzlagerkörper relativ zu einem Gehäuse des Antriebs (2) drehbar ist.

13. Wipphebelgehäuse nach einem der vorstehenden Ansprüche, **dadurch gekennzeichnet, dass** die Mutter (41) mittels Wälzlagerkörper (42) relativ zum Traversengehäuse (44) und zur Spannhülse (43) drehbar ist.

14. Wipphebelaktor nach einem der vorstehenden Ansprüche, **dadurch gekennzeichnet, dass** an der Grundplatte (11) ein Anschlag (49) vorgesehen ist, gegen den die Laufrolle (10) in Anlage bringbar ist derart, dass eine weitere Betätigung des Antriebs (2) dazu führt, dass das von der Rutschkupplung (6) übertragbare Antriebsmoment überschritten ist und infolgedessen die Mutter (41) eine Relativbewegung zur Innenhülse (29) erfährt und somit das Traversengehäuse (44) und damit der Schiebekeil (18) eine Verlagerung axial in Richtung zum Antrieb (2) erfahren und damit der Abstand des Wipphebelendes (13) relativ zur ersten Kupplungsscheibe der Kupplung eine Verkleinerung erfährt.
